## Europäisches Patentamt
## European Patent Office
## Office européen des brevets

(19)

(11) Veröffentlichungsnummer: **0 277 558**
**B1**

(12) **EUROPÄISCHE PATENTSCHRIFT**

(45) Veröffentlichungstag der Patentschrift:
05.09.90

(51) Int. Cl.⁵: **B29B 7/74, B29B 7/18**

(21) Anmeldenummer: 88100911.2

(22) Anmeldetag: 22.01.88

(54) Verfahren und Vorrichtung zur Herstellung von Kautschukmischungen.

(30) Priorität: 30.01.87 DE 3702833

(43) Veröffentlichungstag der Anmeldung:
10.08.88 Patentblatt 88/32

(45) Bekanntmachung des Hinweises auf die Patenterteilung:
05.09.90 Patentblatt 90/36

(84) Benannte Vertragsstaaten:
AT BE CH DE ES FR GR LI LU NL SE

(56) Entgegenhaltungen:
EP-A- 0 025 486
CH-A- 421 907
DE-A- 2 138 082
DE-A- 2 518 502
DE-B- 1 131 389
FR-A- 2 371 282
GB-A- 615 202
US-A- 1 513 733
US-A- 2 495 242

PATENT ABSTRACTS OF JAPAN, Band 8,
Nr. 120 (M-300)[1557], 6. Juni 1984; &
JP-A-59 24 646 (TOYODA GOSEI K.K.) 08-02-1984

(73) Patentinhaber: Peter, Julius, Dr., Tiergartenstrasse 107,
D-3000 Hannover 71(DE)

(72) Erfinder: Peter, Julius, Dr., Tiergartenstrasse 107,
D-3000 Hannover 71(DE)

(74) Vertreter: Depmeyer, Lothar, i. Fa. Continental
Aktiengesellschaft Köningsworther
Platz 1 Postfach 169, D-3000 Hannover 1(DE)

## Beschreibung

Die Erfindung bezieht sich auf ein Verfahren und eine Vorrichtung zur Herstellung von Kautschukmischungen, aufgeteilt in die zwei Stufen Grund- und Fertigmischen, wobei die Maximaltemperatur beim Fertigmischen niedriger als beim Grundmischen ist, entsprechend den Merkmalen der Oberbegriffe der unabhängigen Ansprüche.

Der Herstellung vulkanisationsfähiger Kautschukmischungen aus den dazu notwendigen Bestandteilen, nämlich Kautschuk, Füllstoffen, sonstigen Zuschlagstoffen und den zur Vulkanisation bzw. Haftung notwendigen Bestandteilen, kommt bei der Herstellung von Gummiwaren eine entscheidende Bedeutung zu. Neben den Aggregaten zur Vulkanisation stellen die zum Mischen und Aufarbeiten den größten Investitionsblock in einer Gummifabrik dar. Zur Herstellung der Mischungen werden in erster Linie Innenmischer eigesetzt.

Der Mischprozeß erfült zweierlei Aufgaben:

Zum einen müssen die für die Verarbeitungs- und Gebrauchseigenschaften notwendigen Zusatzstoffe, wie z.B. hochaktive und andere Füllstoffe, Weichmacher, Verarbeitungshilfsmittel, Alterungsschutzmittel, Ozonschutzmittel, Farbstoffe etc. möglichst schnell und gut dispergiert werden. Hierbei können je nach dem verwendeten Mischungsaggregat, dem Mischungstyp und den verwendeten Mischbedingungen ohne Schädigung der Mischung Temperaturen bis 150 Grad Celsius und dar über erreicht werden (Grundmischen). Zum anderen müssen aber die zur Vernetzung und Haftung an Substraten notwendigen Stoffe, wie z. B. Schwefel und Vulkanisationsbeschleuniger, Peroxyde, Vulkanisationsharze, RF-Systeme etc. bei so niedrigen Temperaturen eingemischt werden, daß dabei noch keine vorzeitigen Reaktionen eintreten. Bei den meisten Beschleuniger- und Haftungssystemen dürfen Temperaturen von 100° bis 110°C nicht überschritten werden (Fertigmischen).

Bei größeren Durchsatzmengen, wie sie insbesondere die Reifenindustrie fordert, wird deshalb nach einem zweistufigen Verfahren gemischt: Zunächst werden die Zusatzstoffe bei relative hoher Temperatur dem Kautschuk beigemischt (Grundmischen). Die Mischung wird dann auf einem Aufarbeitungsaggregat und anschließend in Luft koder Wasser abgekühlt und schließlich zwischengelargert. Dann werden im zweiten Schritt die zur Vernetzung und Haftung an Substraten erforderlichen Stoffe bei niedrigerer Temperatur als der Grundmischtemperatur beigemischt (Fertigmischen). Beim Fertigmischen muß die Temperatur so niedrig sein, daß der Kautschuk nicht schon im Mischer vernetzt. Eine derartige Vorgehensweise ist allgemeiner Stand der Technik. Die Zweistufigkeit des bekannten Mischverfahrens bedingt kostenintensive innerbetriebliche Transporte, erhöht den Anfall unverwertbarer Restmengen und verlangt vor beiden Verfahrensschritten ein Abwiegen der jeweiligen Mischungsbestandteile.

Um diese Nachteile zu vermeiden, sind solche - sogenannte einstufige - Knetverfahren entwickelt worden, wo die beiden entscheidenden Verfahrensschritte, das Grundmischen und das Fertigmischen, unter Zwischenschaltung eines Kühlprozesses, aufeinanderfolgend innerhalb eines Aggregates erfolgen. Die so verfahrenden Kneter arbeiten aber zu langsam. Für die großen in Reifenfabriken erforderlichen Durchsatzmengen müßten etliche dieser Kneter parallel aufgestellt werden; sie würden damit eine zu große Investition erfordern und zu viel Platz in den Werkshallen beanspruchen.

Aufgabe der Erfindung ist es, die Gesamtmischzeit zu verkürzen und die Mischvorrichtung zu vereinfachen.

Die Aufgabe wird erfindungsgemäß durch die Merkmale der unabhängigen Ansprüche 1 und 5 gelöst.

Gegenüber dem sogenannten einstufigen Verfahren, das besser Einaggregatsverfahren genannt würde, ergibt sich durch die Gleichzeitigkeit des Grund- und Fertigmischens eine erhebliche Zeitersparnis. Die nach dem erfindungsgemäßen Verfahren arbeitende Aggregatekombination ermöglicht - bei Spezialisierung des Fertigmischers auf Kühlen und Fertigmischen - einen mindestens ebenso schnellen Mischgutdurchsatz, wie das mit zwei parallel arbeitenden Einaggregatmischern möglich ist. Dabei ist die erfindungsmäßige Aggregatekombination aber erheblich einfacher und billiger, weil hier nur einer der beiden Kneter ein teurer Stempelkneter zu sein braucht. Überdies muß allein der Grundmischer die enorme Kraft und Leistungsfähigkeit zur Plastifizierung einer kalten Kautschukmischung haben, während der Fertigmischer nur auf die Plastifizierung der etwa 100° warmen - und damit wesentlich fließwilligeren - fertigen Grundmischung ausgelegt zu sein braucht. Deshalb wird zweckmäßigerweise für den Fertigmischer höchstens 30% der Antriebsleistung des Grundmischers installiert.

Zur weiteren Verfahrensbeschleunigung eignet sich eine Verkürzung der im Fertigmischer erfolgenden anfänglichen Kühlphase, die dadurch ermöglicht wird, daß die kühlende Oberfläche des Fertigmischers um 10% bis 60% vorzugsweise um 15% bis 50% größer ist als die des Grundmischers. Dies kann sowohl durch eine besonders dichte Beschaufelung des Fertigmischers erreicht werden als auch dadurch, daß der gesamte Fertigmischer in seinem Fassungsvermögen größer dimensioniert ist als der Grundmischer. Zweckmäßigerweise ist die kleinste Wandstärke zwischen den Kühlkanälen und den dem Mischgut zugewandten Wandungsoberflächen beim Fertigmischer kleiner als beim Grundmischer. Diese Maßnahme wird durch die geringe mechanische Beanspruchung des Fertigmischers erlaubt und bringt einen besonders niedrigen Wärmeübergangswiderstand vom Mischgut zu den Kühlkanälen in den Schaufeln und dem Trog des Fertigmischers.

Vorteilhafterweise wird das Fertigmischen dadurch beschleunigt, daß die zu Beginn des Fertigmischens erfolgende Zusetzung der Vernetzungsmittel und der zur Haftung an Substraten dienenden reaktiven Stoffe in der Weise erfolgt, daß diese Mittel beziehungsweise Stoffe auf die freie Oberfläche des Mischgutes verteilt werden. Gegenüber der bislang üblichen punktartigen Aufbringung ergibt die flächige schon am Anfang einen höheren Gleichmäßigkeitsgrad. Diese Verbesserung wird durch die Stempellosigkeit des Fertigmischers ermöglicht.

Die Aufenthaltsdauer des Mischgutes im Fertigmischer kann weiter dadurch verkürzt werden, daß die zu Beginn des Fertigmischers zugesetzten Vernetzungsmittel und/oder die zur Häftung an Substraten dienenden reaktiven Stoffe im Fertigmischer nur grob vorverteilt und nachfolgend in einem Walzwerk, oder einer Einfach- oder einer Doppelmischschnecke feinverteilt werden. In der vorgenannten Aufzählung sind die drei alternativen Aggregate nach ihrem Fassungsvermögen geordnet. Bei Anwendung des erfindungsgemäßen Verfahrens in Fabriken mit großem Kautschukbedarf - gerade an diese wendet sich die Erfindung in erster Linie, weil sich dort der beschleunigte Kautschukdurchsatz am stärksten auswirkt - wird die Doppelmischschnecke aufgrund ihres größten Fassungsvermögens bevorzugt.

Um das Bedienungspersonal vor gesundheitsschädlichen organischen Dämpfen und das Mischgut vor Schmutz zu schützen, erfolgt zweckmäßigerweise die Beförderung des Mischgutes vom Grund- zum Fertigmischer unter Staub- und Luftabschluß. Bei stempelloser Ausführung des Fertigmischers läßt sich der Abschluß besonders leicht verwirklichen, da das grundgemischte Gut unmittelbar aus dem staub- und luftdichten Kanal in den Fertigmischer gelangen kann. Die Kanalkonstruktion wird besonders einfach, wenn für die Mischgutbeförderung keine mechanische Leistung von außen zugeführt werden braucht. Deshalb empfiehlt es sich, den Grundmischer so hoch über dem Fertigmischer und gegenüber letzterem höchstens insoweit schräg versetzt anzuordnen, daß die Schwerkraft allein zur Überwindung aller Reibungswiderstände bei der Beförderung des Mischgutes vom Grundmischer zum Fertigmischer ausreicht. Die Anordnung übereinander senkt zudem den Platzbedarf.

Gegenüber dem bislang bekannten Zweistufenverfahren entfallen durch die Erfindung die Transporte vom Grundmischkneter zur Zwischenlagerstätte und von der Zwischenlagerstätte zum Fertigmischkneter sowie der Platzbedarf eines Zwischenlagers. Überdies entfällt das bislang erforderliche Abwiegen der Grundmischung vor dem Fertigmischen. Zur Bedienung ist nur noch ein Kneterführer sowie ein Bedienungsmann erforderlich. Weiterhin werden statt zweier kompletter Kneteranlagen, zweier Aufarbeitungsanlagen und zweier Batch-off-Anlagen nur noch eine Kneteranlage, ein zweiter Mischtrog sowie nur eine Aufarbeitungsanlage und eine Batch-off-Anlage benötigt. Da Grund- und Fertigmischen in einer Wärme erfolgen, entfällt der bislang erforderliche Energieaufwand zum Plastifizieren vor dem Fertigmischen. Nicht zuletzt entstehen weniger Reinigungskosten, weil eine Aufarbeitungsanlage sowie ein Batch-off-Anlage wegfällt; ein Mischungswechsel wird dadurch erleichtert.

Selbstverständlich ist es möglich, auch nichtreaktive Stoffe erst im unteren Kneter zuzufügen.

Zweckmäßigerweise wird das Mischgut aus dem unteren Kneter auf ein darunter befindliches Walzwerk oder eine Einfachmischschnecke oder eine Doppelmischschnecke entleert und wie üblich weiterverarbeitet. Dabei ist eine Mischschnecke, insbesondere eine Doppelmischschnecke vorteilhaft, weil sie nicht die Größe der Mischvorrichtung begrenzt, vor allem auch dann nicht, wenn zum Beschicken des Aggregats Stopfvorrichtungen verwendet werden. In diesen Aggregaten, die mehrfach beschrieben worden sind, kann eine hervorragende Verteilung der Mischungsingredienzien bei relativ niedrigen Temperaturen erreicht werden.

Anschließend wird ein Band gespritzt und in den üblichen Batch-off-Anlagen aufgearbeitet.

Während der Mischprozesse sollte in beiden Knetern die Temperatur und der Energieeintagg gemessen und der Mischprozeß on line gesteuert werden. Darüberhinaus empfiehlt es sich, Kenndaten der Mischschnecke und dem daraus austretenden Mischgut, wie z.B. Spritzquellung, Oberflächengüte etc., ebenfalls zur on-line Steuerung heranzuziehen. Dadurch wird eine Beschränkung der Qualitätskontrolle allein auf die Feststellung der Vulkanisationscharakteristika und der Vulkanisationsdaten ermöglicht.

Weitere Einzelheiten der Erfindung werden anhand der Zeichnung erläutert; es zeigen:

Fig. 1 eine Vorrichtung zur Durchführung des erfindungsgemäßen Verfahrens in schematischer Darstellung und

Fig. 2 einen senkrechten Schnitt durch die Maschinenaggregat zur Durchführung des erfindungsgemäßen Verfahrens.

Eine Vorrichtung zur Durchführung des erfindungsgemäßen Verfahrens wird anhand der Figur erläutert. Sie zeigt einen hoch angeordneten Stempelkneter 1 zur Herstellung der Grundmischung. Der Pfeil 2 zeigt den Zustrom der Grundmischungsbestandteile. Die fertige Grundmischung wird, wie der Pfeil 3 zeigt, unter Ausnutzung der Schwerkraft und ohne Zwischenlagerung in den Stempellosen Kneter 4 befördert. In diesem Verfahrensschritt ist die Kneterdrehzahl so gering, daß eine schnellstmögliche Abkühlung erreicht wird. Nachdem die Mischung bis unter die kritische Temperatur abgekühlt ist, die für die meisten Beschleunigersysteme zwischen 100° und 110°C liegt, werden, wie der Pfeil 5 andeutet, die reaktiven Stoffe zugegeben. Durch Dispergierung entsteht die vulkanisationsfähige Fertigmischung, die wie der Pfeil 6 zeigt, in ein Schneckenmischwerk 7 entleert wird. Zur Erleichterung ist, wie das Scharniergelenk 8 andeutet, der untere Kneter kippbar aufgestellt.

Wie das skizzierte Ausführungsbeispiel zeigt, wird durch das erfindungsgemäße Verfahren ein sehr kompakter Anlagenaufbau ohne Platz- und Transportkapazität beanspruchende Zwischenlagerung ermöglicht.

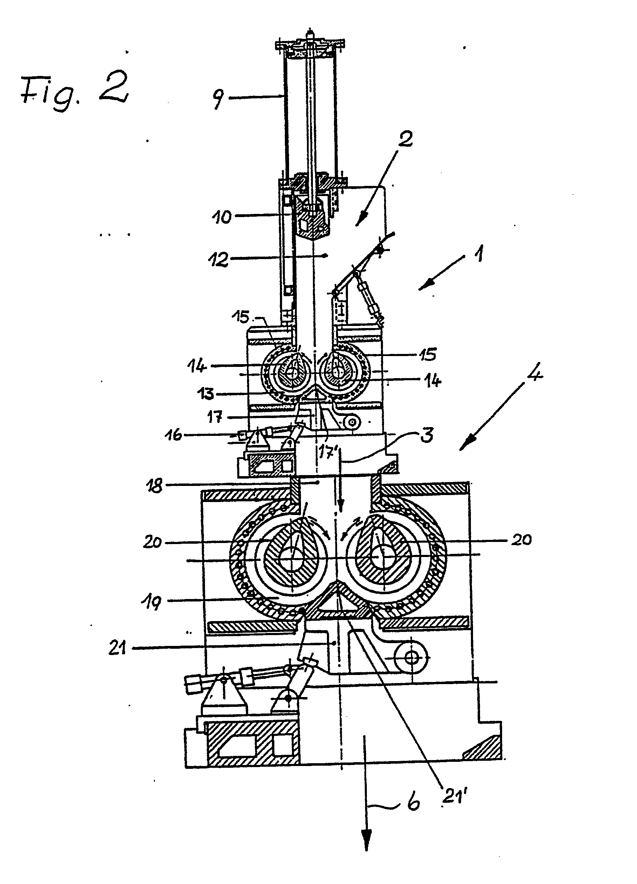

Der Stempelkneter 1 hat oben einen Arbeitszylinder 9 zum Heben und Senken eines Stempels 10, der zum Beschicken der Mischkammer 13 sich in seiner oberen Endstellung gemäß Fig. 2 befindet. Die Bestandteile der Grundmischung werden im Sinne des Pfeiles 2 über einen Speisetrichter 12 zugeführt. Nach der Beschickung wird der Stempel 10 abgesenkt, und zwar so weit, daß er die Mischkammer 13 mit den beiden hierin befindlichen Rotoren 14 nach oben hin abschließt. In bekannter Weise wird die Mischkammer 13 zur Seite hin durch Troghälften 15 abgeschlossen. Dabei können diese Hälften und die hierin befindlichen Rotoren die üblichen Konstruktionen aufweisen, insb. auch mit geeigneten Kühleinrichtungen ausgestattet sein.

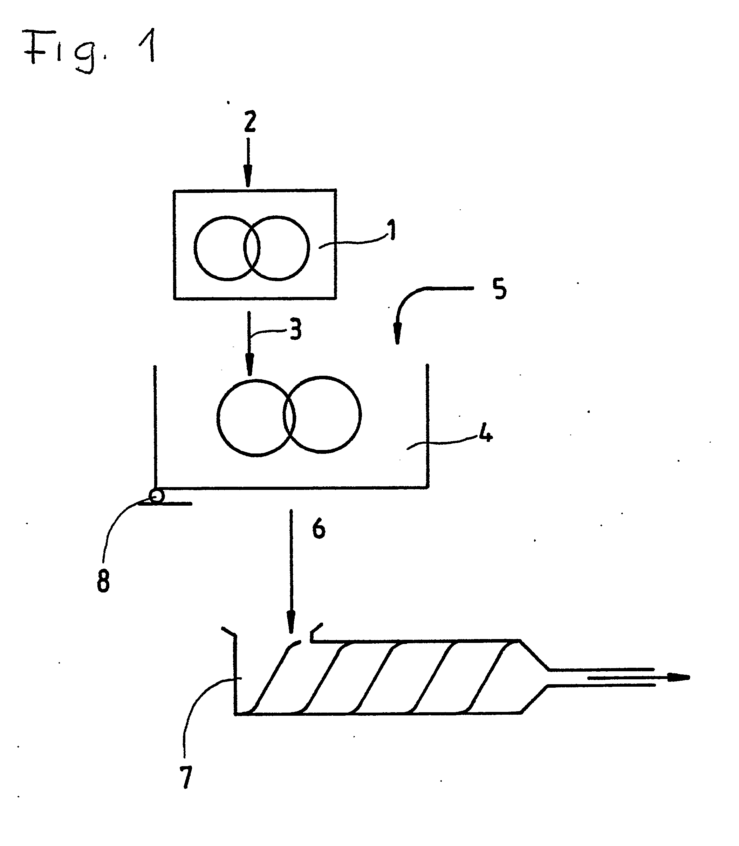

Die Mischkammer 13 wird nach unten hin durch einen mittels Arbeitszylinder 16 klappbaren Sattel 17 abgeschlossen, dessen Spitze 17′ in die Mischkammer 13 hineinragt. Nach Fertigstellung der Grundmischung wird die Mischkammer 13 durch Klappen des Sattels 17 nach unten entleert, indem die Grundmischung unmittelbar aus der Mischkammer 13 austritt und über den stets offenen (stempellosen) Eintritt 18 in die Mischkammer 19 mit ebenfalls zwei Rotoren 20 des Kneters 4 gelangt, der eine im Vergleich zum Stempelkneter 1 wesentlich größere Mischkammer 19 aufweist und auch eine vergleichsweise kleinere Drehzahl seiner Rotoren 20 hat, um so die erwähnte Abkühlung des Mischgutes sicherzustellen. Nach Zugabe der reaktiven Stoffe im Sinne des Pfeiles 5 wird die fertige Mischung abgezogen, in dem der Klappsattel 21 des Kneters nach unten abgeklappt wird. Die fertige Mischung wird dann gemäß Fig. 1 weiterbehandelt.

Während der Behandlung der Mischung im Kneter 4 erfolgt bereits die Vorbereitung der nächsten Charge im Stempelkneter 1. Sollte dessen Kapazität zu groß sein bzw. die Kapazität des Kneters 4 für die erwähnten Operationen zu klein, so kann ein zweiter Kneter 4 installiert werden, wobei dann diese vorzugsweise nebeneinander anzuordnen wären, um wahlweise den einen oder den daneben befindlichen Kneter 4 zu beschicken. Diese Verteilung des Mischgutes auf zwei Kneter 4 könnte in einfacher Weise durch ein unterhalb des Stempelkneters 1 befindliches schwenkbares Leitblech vollzogen werden.

## Patentansprüche

1. Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung in einer zweiten Stufe unter Zufügen von reaktiven Zusatzstoffen ebenfalls chargenweise fertig gemischt wird, wobei die Maximaltemperatur beim Fertigmischen niedriger ist als die beim Grundmischen, dadurch gekennzeichnet, dass die Grundmischung ohne Zwischenlagerung zum Fertigmischen und Abkühlen in einen stempellosen Kneter überführt wird.

2. Verfahren nach Anspruch 1, dadurch gekennzeichnet, dass die reaktiven Zusatzstoffe zu Beginn des Fertigmischens zugesetzt werden.

3. Verfahren nach Anspruch 2, dadurch gekennzeichnet, dass die reaktiven Zusatzstoffe auf die freie Oberfläche des Mischgutes verteilt werden.

4. Verfahren nach einem der Ansprüche 1 bis 3, dadurch gekennzeichnet, dass die Überführung der Grundmischung zum Fertigmischen unter Staub- und Luftabschluss erfolgt.

5. Vorrichtung zur Durchführung des Verfahrens nach Anspruch 1, bestehend aus einem chargenweise arbeitenden Stempelkneter als Grundmischer und einem nachgeordneten, ebenfalls chargenweise arbeitenden Kneter als Fertigmischer, dadurch gekennzeichnet, dass der Fertigmischer ein stempelloser Kneter (4) ist, der im Vergleich zum Grundmischer (1) ein grösseres Fassungsvermögen aufweist und unmittelbar unter dem Grundmischer (1) angeordnet ist.

S. Vorrichtung nach Anspruch 5, dadurch gekennzeichnet, dass für den Fertigmischer (4) höchstens 30% der Antriebsleistung des Grundmischers (1) installiert ist.

7. Vorrichtung nach Anspruch 5 oder 6, dadurch gekennzeichnet, dass die kühlende Oberfläche des Fertigmischers (4) um 5% bis 60% grösser ist als die des Grundmischers (1).

8. Vorrichtung nach einem der Ansprüche 5 bis 7, dadurch gekennzeichnet, dass der Grundmischer (1) gegenüber dem Fertigmischer (4) derart seitlich versetzt angeordnet ist, dass das überführen des Mischgutes (3) vom Grundmischer (1) zum Fertigmischer (4) allein durch Schwerkraft erfolgt.

9. Vorrichtung nach einem der Ansprüche 5 bis 8, dadurch gekennzeichnet, dass zwischen Grundmischer (1) und Fertigmischer (4) ein staub- und luftdichter Überführungskanal angeordnet ist.

10. Vorrichtung nach einem der Ansprüche 5 bis 9, dadurch gekennzeichnet, dass der Fertigmischer (4) kippbar ist.

11. Vorrichtung nach Anspruch 5, dadurch gekennzeichnet, dass das Mischgut durch Schwerkraft vom Grundmischer zum Fertigmischer beförderbar ist.

12. Verfahren zur Herstellung von Kautschukmischungen nach Anspruch 1 unter Verwendung einer Vorrichtung nach Anspruch 5, dadurch gekennzeichnet, dass der Fertigmischer mit einer so geringen Kneterdrehzahl betrieben wird, dass eine schnellstmögliche Abkühlung erreicht wird.

## Revendications

1. Procédé pour la fabrication de mélanges de caoutchouc, dans lequel, dans une première étape, un mélange primaire est fabriqué dans un malaxeur à poinçon opérant charge par charge à partir de caoutchouc et de substances d'addition non réactives, et le mélange primaire est soumis à un mélange final dans une seconde étape, également en opérant charge par charge avec introduction de substances d'addition réactives, la température maximale lors du mélange final étant plus petite que celle intervenant lors du mélange primaire, caractérisé en ce que le mélange primaire est transféré, sans stockage intermédiaire, en vue d'un mélange final et d'un refroidissement dans un malaxeur sans poinçon.

2. Procédé selon la revendication 1, caractérisé en ce que les substances réactives d'addition sont ajoutées au début du mélange final.

3. Procédé selon la revendication 2, caractérisé en ce que les substances réactives d'addition sont réparties sur la surface libre du produit mélangé.

4. Procédé selon une des revendications 1 à 3, caractérisé en ce que le transfert du mélange primaire en vue du mélange final est effectué avec protection contre les poussières et l'air.

5. Dispositif pour la mise en œuvre du procédé selon la revendication 1, se composant d'un malaxeur à poinçon opérant charge par charge et servant de mélangeur primaire ainsi que d'un malaxeur placé à la suite, opérant également charge par charge et servant de mélangeur final, caractérisé en ce que le mélangeur final est un malaxeur (4) sans poinçon, qui a une plus grande capacité que le mélangeur primaire (1) et qui est disposé directement en dessous du mélangeur primaire (1).

6. Dispositif selon la revendication 5, caractérisé en ce qu'au maximum 30% de la puissance d'entraînement du mélangeur primaire (1) sont utilisés pour le mélangeur final (4).

7. Dispositif selon la revendication 5 ou 6, caractérisé en ce que la surface de refroidissement du mélangeur final (4) est supérieure de 5% à 60% à celle du mélangeur primaire (1).

8. Dispositif selon une des revendications 5 à 7, caractérisé en ce que le mélangeur primaire (1) est disposé avec décalage latéral par rapport au mélangeur final (4) de telle sorte que le transfert du produit mélangé (3) du mélangeur primaire (1) dans le mélangeur final (4) s'effectue uniquement par la force de gravité.

9. Dispositif selon une des revendications 5 à 8, caractérisé en ce qu'il est prévu un canal de transfert, étanche aux poussières et à l'air, entre le mélangeur primaire (1) et le mélangeur final (4).

10. Dispositif selon une des revendications 5 à 9, caractérisé en ce que le mélangeur final (4) est basculant.

11. Dispositif selon la revendication 5, caractérisé en ce que le produit mélangé peut être transféré du mélangeur primaire dans le mélangeur final par la force de gravité.

12. Procédé de fabrication de mélanges de caoutchouc selon la revendication 1, avec utilisation d'un dispositif selon la revendication 5, caractérisé en ce que le mélangeur final est entraîné à une vitesse de rotation de malaxage suffisamment petite pour obtenir un refroidissement aussi rapide que possible.

**Claims**

1. Methode for making rubber mixtures, wherein, in a first step, a master-batch is produced in charges in a ramtype masticator from rubber and non-reactive additional substances, and the master-batch is finally mixed in a second step, with the addition of reactive additional substances, likewise in charges, the maximum temperature during the final mixing process being lower than that during the master-batching process, characterised in that the master-batch is transferred into a ramless masticator for final mixing ans cooling without any intermediate storage.

2. Methode according to claim 1, characterised in that the reactive additional substances are added at the beginning of the final mixing process.

3. Methode according to claim 2, characterised in that the reactive additional substances are distributed over the free surface of the material for mixing.

4. Methode according to one of claims 1 to 3, characterised in that the transfer of the master-batch for the final mixing process is effected with the exclusion of dust and air.

5. Device for carrying out the method according to claim 1, comprising a ram-type masticator, which operates in charges and serves as the master-batcher, which likewise operates in charges and serves as the final mixer, characterised in that the final mixer is a ramless masticator (4), which has a greater capacity in comparison with the master-batcher (1) and is disposed directly beneath the master-batcher (1).

6. Device according to claim 5, characterised in that a maximum of 30% of the efficiency of the master-batcher (1) is provided for the final mixer (4).

7. Device according to claim 5 or 6, characterised in that the cooling surface of the final mixer (4) is greater than that of the master-batcher (1) by an amount of 5% to 60%.

8. Device according to one of claims 5 to 7, characterised in that the master-batcher (1) is disposed in such a laterally offset manner relative to the final mixer (4) that the transfer of the material for mixing (3) from the master-batcher (1) to the final mixer (4) is effected solely by the force of gravity.

9. Device according to one of claims 5 to 8, characterised in that a dust- and air-tight transfer channel is disposed between master-batcher (1) and final mixer (4).

10. Device according to one of claims 5 to 9, characterised in that the final mixer is pivotable.

11. Device according to claim 5, characterised in that the material for mixing is conveyable from the master-batcher to the final mixer by the force of gravity.

12. Method for making rubber mixtures according to claim 1, using a device according to claim 5, characterised in that the final mixer is driven at such a low masticator speed that as rapid a cooling as possible is achieved.

Fig. 1

Fig. 2